**Europäisches Patentamt**

**European Patent Office**

**Office européen des brevets**

(19)

(11) Publication number : **0 469 654 B1**

(12) **EUROPEAN PATENT SPECIFICATION**

(45) Date of publication of patent specification :
29.09.93 Bulletin 93/39

(51) Int. Cl.⁵ : **A21D 8/04, A21D 6/00**

(21) Application number : **91201620.1**

(22) Date of filing : **24.06.91**

(54) **Improved doughs.**

(30) Priority : **09.07.90 EP 90201822**

(43) Date of publication of application :
**05.02.92 Bulletin 92/06**

(45) Publication of the grant of the patent :
**29.09.93 Bulletin 93/39**

(84) Designated Contracting States :
**AT BE CH DE DK ES FR GB GR IT LI NL SE**

(56) References cited :
**GB-A- 740 379**
**US-A- 3 245 799**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Graveland, Aris, Unilever Research**
**Vlaardingen Lab., Olivier van Noortlaan 120**
**NL-3133 AT Vlaardingen (NL)**

(74) Representative : **Hartong, Richard Leroy et al**
**Unilever N.V. Patent Division P.O. Box 137**
**NL-3130 AC Vlaardingen (NL)**

## Description

A problem frequently occurring when handling frozen doughs, especially non-fermented doughs, like puff pastry doughs, is the darkening of the doughs during storage after thawing.

In US 3 245 799 it is disclosed that discoloration of frozen doughs can be prevented by acidifying the doughs to a pH of about 4.5. For this purpose, a number of organic acids can be added to the doughs.

We have conducted a study to find out if and how darkening of doughs during storage, after thawing, can be avoided. The darkening of the doughs was measured on both a lean bread dough and a puff pastry dough. Consequently, the following procedures were used :

Lean bread dough

Doughs were prepared by kneading 50 g of flour and 32 ml of distilled water for 5 minutes in a Farinograph mixer. The doughs were transferred to a tub which was closed with a lid and allowed to stand overnight (in total 18 hours) at room temperature. The degree of darkening was measured with a chroma meter (Minolta Chroma meter CR-231) according to the method of CIE (1931), Color Systems, page 72.

Puff pastry dough

Doughs were prepared by kneading in a Diosna mixer : 400 g of flour, 310 g of margarine (Trio Korst) in small cubes, 200 ml of water, 31 g of egg powder and 3 g of NaCl.

The dough was mixed by using 50 strokes. Subsequently, the dough was laminated into 160 layers. The laminated dough was frozen and stored for one day at -20°C, then put in a refrigerator for thawing at +10°C and finally stored for one day at room temperature. The degree of darkening was measured with a chroma meter.

We have found that the addition of a small amount of glucose oxidase to the doughs inhibits the appearance, after thawing, of grey spots in frozen doughs.

Although the addition of glucose oxidase to doughs has been described in the prior art (cf. US 2 783 150 and Chemical Abstracts 71 (1969), pp. 225-226), it has never been disclosed that the darkening of dough can be prevented by this addition. Moreover, so far the use of glucose oxidase in non-fermented dough, in particular puff pastry doughs has never been described.

Therefore, our invention concerns in the first place the use of glucose oxidase in doughs to prevent grey spots appearing, after thawing, in the frozen doughs on storage. Doughs that are particularly suitable for this use are non-fermented doughs, especially puff pastry doughs.

The invention is also concerned with doughs, i.e. the non-fermented doughs that contain a small amount of glucose oxidase. In general, an amount of 1-30 ppm. glucose oxidase is sufficient, although larger amounts can also be used. We prefer to use 5-15 ppm. glucose oxidase.

Products obtained after baking of shaped products consisting of the doughs according to the invention are also part of the invention.

A side-effect of the addition of glucose oxidase to the doughs is that the patty height of puff pastries is increased.

The invention will now be illustrated by the following non-limitative Examples :

EXAMPLE I

Zeeuwse flour having a protein content of 9.5 wt.%, a water content of 14.0 wt.% and an ash content of 0.5 wt.%, displaying an oxygen uptake of 5.0 $\mu$mol $O_2$/g/10 min., was used to prepare a lean dough in accordance with the recipe referred to previously in this specification. Different amounts of glucose oxidase were added to the flour (see Table I). The glucose oxidase used was Sp-358 (liq.) that displayed an enzyme activity of 1.5 units/mg.

The darkening of the doughs obtained was measured 16 hours after they had left the freezer (Zeeuwse flour without glucose oxidase being the standard).

The results are shown in Table I

## TABLE I

### Effect of glucose oxidase on the darkening process

| Dough samples | Degree of darkening |
|---|---|
| Zeeuwse flour (blank) | 100% |
| + 5 $\mu$l* glucose oxidase | 80% |
| + 10 $\mu$l glucose oxidase | 40% |
| + 25 $\mu$l glucose oxidase | 20% |
| + 50 $\mu$l glucose oxidase | 0% |
| + 100 $\mu$l glucose oxidase | 0% |

* per kg flour

EXAMPLE II

The effect of the addition of glucose oxidase on the patty height was measured, using a Columbus flour. This flour contained 10.5 wt.% of protein, 14.1 wt.% of water, 0.45 wt.% of ash and displayed an $O_2$ uptake of 4.0 $\mu$mol $O_2$/g/10 minutes.

For baking the URL-French method was used (see EP Patent Application 90 201277.2).

Using different amounts of glucose oxidase yielded the results as mentioned in Table II.

## TABLE II

| Dough samples | Patty height | Shrinkage (%) | |
|---|---|---|---|
| | | Top | Bottom |
| Columbus | 45 | 23 | 14 |
| + 10 $\mu$l* glucose oxidase | 48 | 23 | 15 |
| + 20 $\mu$l glucose oxidase | 55 | 30 | 15 |
| + 50 $\mu$l glucose oxidase | 60 | 37 | 21 |
| + 100 $\mu$l glucose oxidase | 46 | 43 | 35 |

* per kg flour

**Claims**

1.  Use of glucose oxidase in doughs, characterized by using glucose oxidase to prevent the appearance, after thawing, of grey spots in frozen doughs.

2.  Use of glucose oxidase in doughs according to Claim 1, wherein a non-fermented dough is used.

3.  Use of glucose oxidase in doughs according to Claim 2, wherein a puff pastry dough is used.

4. Non-fermented dough, wherein glucose oxidase is incorporated as grey-spot inhibitor.

5. Non-fermented dough according to Claim 4, wherein 1-30 ppm. glucose oxidase is present.

6. Products obtained after baking of shaped products consisting of the doughs of Claims 4-5.

**Patentansprüche**

1. Verwendung von Glucoseoxidase in Teigen, gekennzeichnet durch die Verwendung von Glucoseoxidase, um das Auftreten grauer Flecken in gefrorenen Teigen nach dem Auftauen zu verhindern.

2. Verwendung von Glucoseoxidase in Teigen nach Anspruch 1, wobei ein nicht fermentierter Teig verwendet wird.

3. Verwendung von Glucoseoxidase in Teigen nach Anspruch 2, wobei ein Teig für Blätterteiggebäck verwendet wird.

4. Nicht fermentierter Teig, dem die Glucoseoxidase als Inhibitor grauer Flecken einverleibt ist.

5. Nicht fermentierter Teig nach Anspruch 4, in dem 1 bis 30 ppm Glucoseoxidase vorliegen.

6. Produkte, erhalten nach dem Backen von aus den Teigen von Anspruch 4 und 5 bestehenden geformten Produkten.

**Revendications**

1. Utilisation d'oxydase de glucose dans les pâtes, caractérisée par l'utilisation d'oxydase de glucose afin d'empêcher l'apparition, après décongélation, de tâches grises dans les pâtes congelées.

2. L'utilisation d'oxydase de glucose dans les pâtes selon la Revendication 1, dans laquelle on utilise une pâte non fermentée.

3. L'utilisation d'oxydase de glucose dans les pâtes selon la Revendication 2, dans laquelle on utilise une pâte feuilletée.

4. Pâte non fermentée, dans laquelle l'oxydase de glucose est incorporé en tant qu'inhibiteur de tâches grises.

5. La pâte non fermentée selon la Revendication 4, dans laquelle une quantité de 1 à 30 ppm d'oxydase de glucose est présente.

6. Produits obtenus après cuisson de produits mis en forme composés des pâtes selon les Revendications 4-5.